# EUROPEAN PATENT APPLICATION

(11) **EP 4 684 924 A1**
(43) Date of publication of application: **28.01.2026**
(21) Application number: 24190600.7
(22) Date of filing: 24.07.2024
(51) Int. Cl.: B25J 9/16

(54) **METHOD AND SYSTEM FOR DETERMINING CRITICAL TARGETS AROUND THE INTERFERENCE ZONE OF INDUSTRIAL ROBOTS**

(71) Applicant: Siemens Industry Software Ltd., 7019900 Tel Aviv (IL)
(72) Inventor: Hazan, Moshe, 4083918 Elad (IL)
(74) Representative: Siemens Patent Attorneys

(57) **Abstract**

System and a method for determining critical target locations around the interference zone between at least two virtual robots in an industrial environment. Data on a first virtual robot and on a second virtual robot are received to load into a virtual robotic application. Data on the two robotic programs of the two corresponding robots are received. A potential interference zone is determined based on an intersection of two robotic reach-zones generated from stretched kinematic chains of the two corresponding robots. A set of bricks filling at least the majority of the potential interference zone is generated. From the set of bricks, one or more subsets of hit-bricks are determined which comprise bricks hittable by one or more robots based on the data of a corresponding robotic program. The interference zone is estimated as the zone around a subset of collision-bricks comprising the hit-bricks that are hittable by both robots. A set of critical target locations is determined around the interference zone estimate.

## Description

### TECHNICAL FIELD

The present disclosure is directed, in general, to computer-aided design, visualization, and manufacturing ("CAD") systems, product lifecycle management ("PLM") systems, product data management ("PDM") systems, and similar systems, that manage data for products and other items (collectively, "Product Data Management" systems or PDM systems). More specifically, the disclosure is directed to production environment simulation. The present disclosure is also directed to the control and/or command of an industrial robot.

### BACKGROUND OF THE DISCLOSURE

In several industrial scenarios, robotic plants may contain dozens of robots that work at multiple robotic stations and cells that can be densely populated, sometimes even overcrowded. During manufacturing robotic operations, the speed of execution of the robotic programs has an impact on the final throughput of the plant. Hence, robotic programs shall usually fulfil some upper time-limits. Limiting robotic idle times in interference zones is therefore of much importance.

To avoid collisions with other robots in interference zones ("IZ"), robots are often required to stop their activity and wait for clearing signals from Programmable Logic Controllers ("PLC") giving permission for entering these zones. Such IZ waiting time increases the execution time of the robotic programs with a negative impact on performance. Therefore, it is often required that such important safety semaphore signals are set only where it is strictly necessary.

As used herein, the term interference zone denotes a common three-dimensional ("3D") region where at least two robots operate and are at risk of colliding with each other when trying to occupy it at the same time. In the industry, the accepted solution is calculating the various IZ shapes and impeding the entry of robots with the help of PLC signals so that, at any given time, only a single robot is allowed to be in each dangerous zone.

State-of-the-art techniques for interference calculation typical consist in running the whole robotic simulation and in determining large and complexes 3D shapes of swept volumes ("SV") for each robot in each factory station. Robotic simulations are typically performed via virtual robotic simulation systems. Examples of virtual robotic simulation systems include, but are not limited to, Computer Assisted Robotic ("CAR") tools, Process Simulate (a product of Siemens PLM software suite), robotic simulation software tools and application, and other virtual systems for simulation of industrial robots, herein simply called virtual simulation.

A robot's SV volume denotes the entire 3D space through which that robot and its gun (etc. robotic tools and eventually parts) pass during a given robotic program or operation. After all SV computations, the Interference Zones are calculated as the overlapping 3D sections among all SV regions. Once all interference zones are available, collisions between robots are avoided by identifying - for each robot - the corresponding critical target location before and after each interference zone and by setting the relevant signals semaphores on such identified critical targets. For example, industrial users often make use of robotic software applications like virtual robotic simulation systems.

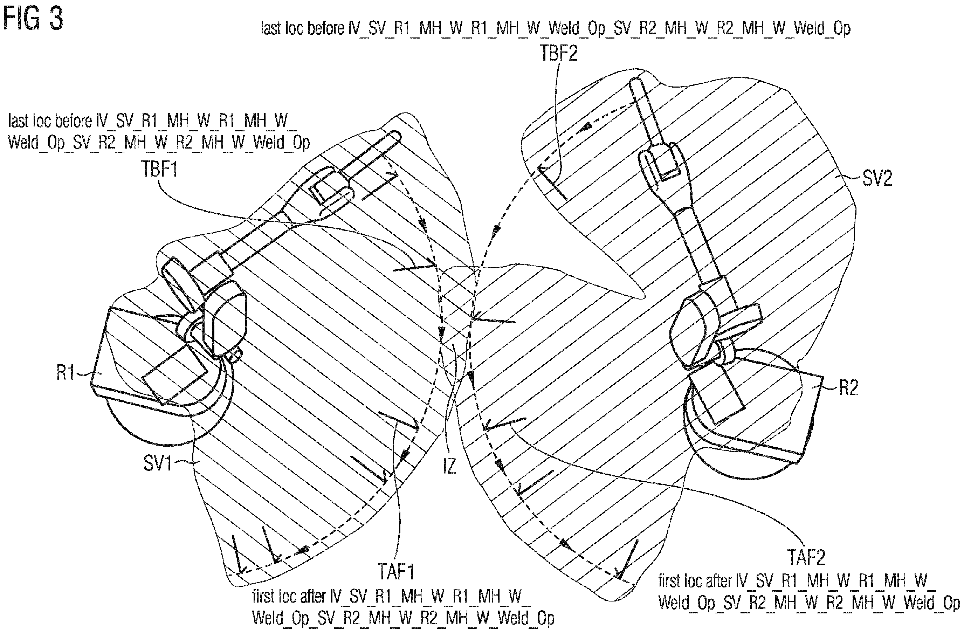

Figure 3 schematically illustrates an example of critical targets determined via robotic swept volumes according to the state of the art. The swept volumes SV1, SV2 of the first and second robots R1, R2 are obtained by determining the robotic motion during the execution of its corresponding robotic program. For each robot, the target locations and the direction of the robotic path are visible on the swept volume and are respectively marked with the 3D cartesian symbols and with direction arrows. As shown in Figure 3, the interference zone IZ is the overlapping zone between the two swept volumes SV1, SV2, of the two robots R1, R2. For the first robot, the critical target locations TBF1, TAF1 before and after the interference zone IZ are determined based on the direction of the robotic path and on the shape of the interference zone IZ. For the second robot, the critical target locations TBF2, TAF2 before and after the interference zone IZ are determined based on the direction of the robotic path and on the shape of the interference zone IZ. Such critical target locations TBF1, TAF1, TBF2, TAF2 are used to set the corresponding robotic signals. For example when the first robot R1 reaches target location TBF1, it needs to wait a permission signal to enter the interference zone and after exiting such zone it updates its exit signal upon reaching target location TAF1.

Typically, the interference calculation is performed via software applications which, unfortunately, may sometimes require running throughout the night. Indeed, identifying critical targets for semaphore signals around the IZ zones for the various robots operating in the factory is a very long and time-consuming task due to the complexity of the IZ determination.

Therefore, improved techniques are desirable.

### SUMMARY OF THE DISCLOSURE

Various disclosed embodiments include methods, systems, and computer readable mediums for determining critical target locations around the interference zone between at least two virtual robots in an industrial environment. A method includes receiving data on a first virtual robot and on a second virtual robot to load into a virtual robotic application. The method further includes receiving data on the two robotic programs of the two corresponding robots. The method further includes determining a potential interference zone based on an intersection of two robotic reach-zones generated from stretched kinematic chains of the two corresponding robots. The method further includes generating a set of bricks filling at least the majority of the potential interference zone. The method further includes determining from the set of bricks, one or more subsets of hit-bricks comprising bricks hittable by one or more robots based on the data of a corresponding robotic program. The method further includes estimating (230) the interference zone as the zone around a subset of collision-bricks comprising the hit-bricks that are hittable by both robots. The method further includes determining a set of critical target locations around the interference zone estimate.

Various disclosed embodiments include methods, systems, and computer readable mediums for generating a training dataset for training an intersection detector Artificial Intelligence ("AI") - module configured for outputting a list of intersection bricks. A method includes receiving data on several initial lists referring to a set of initial bricks in a 3D space - hereafter called Arr0. The method further includes, generating, for each list Arr0, a first list referring to the initial brick set plus a first set of other additional bricks - hereafter called Arr1. The method further includes, generating a second list referring to the initial brick set plus to a second set of other additional bricks different than said first brick set - hereafter called Arr2. The method further includes collecting the first and second lists Arr1, Arr2 for populating an input training dataset and collecting the associated list Arr0 for populating an output training dataset. The method further includes storing the input and output training dataset to train an AI model of the intersection detector AI-module.

Various disclosed embodiments include methods, systems, and computer readable mediums for providing an intersection detector AI-module configured for outputting a list of shared bricks. A method includes receiving a training dataset with a first interface, wherein said training dataset comprises an input training dataset and an output training dataset, wherein the input training dataset comprises several couples of a first and a second list of bricks in a 3D space; and the output training dataset comprises, for each couple of first and second brick lists, a corresponding list of shared bricks. The method further includes training the intersection detector AI-module with the input and output training datasets. The method further includes providing the trained AI module with a second interface.

A data processing system comprising a processor and an accessible memory or database is also disclosed, wherein the data processing system is configured to implement any of the described methods. Embodiments propose also a non-transitory computer-readable medium encoded with executable instructions that, when executed, cause one or more data processing systems to perform any of the described methods.

A data processing system comprising a processor and an accessible memory or database is also disclosed, wherein the data processing system is configured to implement any of the described methods. Embodiments propose also a non-transitory computer-readable medium encoded with executable instructions that, when executed, cause one or more data processing systems to perform any of the described methods.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 schematically illustrates a block diagram of a data processing system in which an embodiment can be implemented.
Figure 2 illustrates a flowchart for determining critical targets around the interference zone of industrial robots in accordance with disclosed embodiments.
Figure 3 schematically illustrates an example of critical targets determined via robotic swept volumes according to the state of the art.
Figure 4 schematically illustrates two examples of potential interference zones in accordance with disclosed embodiments.
Figure 5 schematically illustrates an example of interference zone estimates in accordance with disclosed embodiments.
Figure 6 schematically illustrates another example of critical targets in accordance with disclosed embodiments.
Figure 7 schematically illustrates an example of critical targets in accordance with disclosed embodiments.

### DETAILED DESCRIPTION

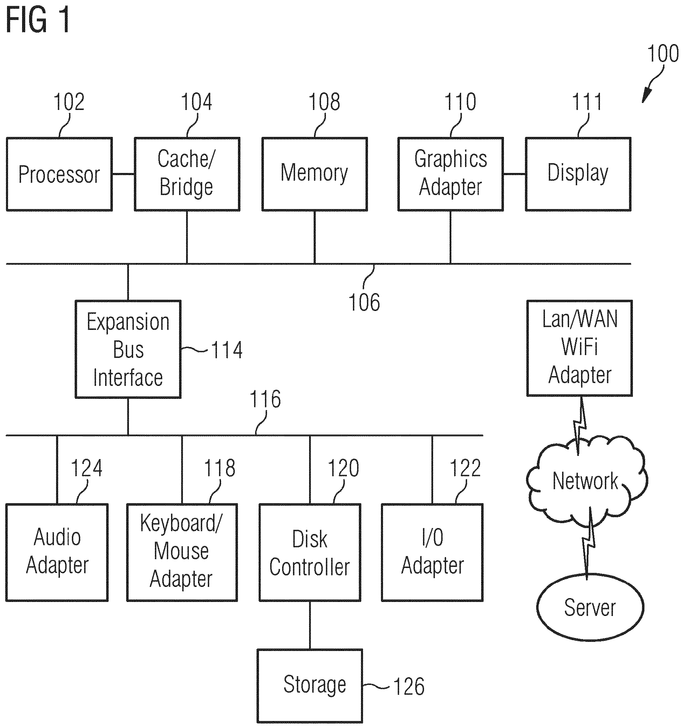

FIGURES 1 through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Previous techniques for determining critical targets around the interference zone of industrial robots have some drawbacks. The embodiments disclosed herein provide numerous technical benefits, including but not limited to the following examples.

Embodiments do not require to generate complicated 3D swept volumes.

Embodiments enable the synchronization of robots in occupying interference zones by simple and easy determination of collisions between a virtual robot and a set of 3D brick graphic objects.

Embodiments provide an AI-trained module for IZ determination which is generic and independent on the type of robot.

Embodiments provide fast results.

Embodiments are effective and automatic.

Embodiments require less memory-hardware.

Embodiments have less chances of crashes overnight.

Embodiments may be used for robot validation purposes.

Embodiments are used by one or more PLCs to set one or more safety signals to control the motion of one or more real robot on the shopfloor.

Figure 1 illustrates a block diagram of a data processing system 100 in which an embodiment can be implemented, for example as a PDM system particularly configured by software or otherwise to perform the processes as described herein, and in particular as each one of a plurality of interconnected and communicating systems as described herein. The data processing system 100 illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but are not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows^{™}, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

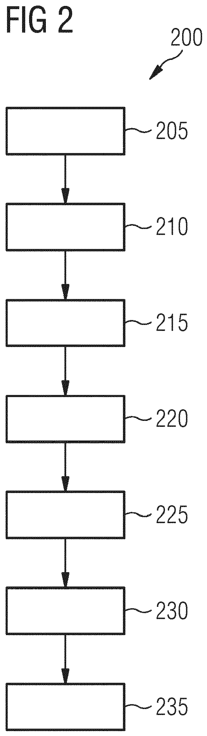

Figure 2 illustrates a flowchart 200 of a method for determining critical target locations around the interference zone between at least two virtual robots in an industrial environment in accordance with disclosed embodiments. Such method can be performed, for example, by system 100 of Figure 1 described above, but the "system" in the process below can be any apparatus configured to perform a process as described. Of course, the "system" in the following description of the method according to embodiments can be any apparatus suitable for performing the described process.

At act 205, a data processing system receives data on a first virtual robot and data on a second virtual robot to load into a virtual robotic application. The term "virtual robotic application" as used herein denotes a robotic software application which can typically show in a 3D view the industrial environment of the robotic factory and which can move each virtual robot.

At act 210, the system receives data on the two robotic programs of the two corresponding robots. With the term "robotic program", it is herein generally intended a set of robotic instructions needed for the robot to perform its robotic tasks e.g. welding, coating, picking, palletizing etc. A typical robotic program includes at least the list of coordinates of the robotic target locations where the robotic tasks are to be performed by the robotic tool, hereby such robotic targets list may be called robotic target path or simply robotic path.

At act 215, the potential interference zone is determined based on an intersection of two robotic reach-zones generated from stretched kinematic chains of the two corresponding robots. As used herein the term "zone", utilized for the (potential) interference zone denotes a set of 3D space portions. In embodiments, to determine a potential interference zone, a robotic simulation platform may be used. In other embodiments, the potential interference zone may be determined without using a robotic simulation. For example, the value of the robotic stretched kinematic chain can be simply taken from a user documentation or by a real measurement performed on a real robot. As used herein the term "robotic simulation platform" or simply "robotic simulation" or "virtual simulation" denotes a software robotic tool or platform whereby the robotic program is simulated by the virtual robot.

At act 220, the system generates a set of bricks filling at least the majority of the volume of the potential interference zone. As used herein the term "brick" denotes a 3D object or a 3D body in the 3D space which is a sub-unit of volume in the total volume of the 3D space. The volume sub-unit or brick can have the shape of a sphere, of a cube, of a cylinder or of any polyhedron or of any other shape also comprising some portions of curved surfaces. For explanatory purposes, the brick shape may herein described as spherical and the "brick" may herein be called "ball". In embodiments, the shape of the brick is spherical. In embodiment, the size of the brick is based on a typical distance between robotic target locations.

At act 225, from the set of bricks, the system determines one or more subsets of hit-bricks comprising bricks hittable by one or more robots based on the data of a corresponding robotic program.

In embodiments, the hit bricks subsets are determined by collecting the bricks which collide with a robot performing the activities of its own corresponding robot program. In embodiments, the determination of the hit brick subsets is performed via a robotic simulation i.e. by collecting the bricks which collided with the robot during its simulated motion of its corresponding robotic program. In other embodiments, the determination of the hit brick subsets for the robotic programs can be performed via other robotic motion predicting techniques which do not require a robotic simulation. For example, such predicting techniques includes techniques to predict motion outcome data of the robot's moving along its robotic path as for example the AI-based predicting techniques taught in US application number 17/295,541 filed on July 18, 2019.

In embodiments, at act 225, the one or more hit-bricks subsets consist of a first list of bricks hittable by the first robot and a second list of bricks hittable by the second robot. In embodiments, the list of bricks hittable by both robots - herein referred with the term "collision brick subset" is determined by an intersection detector AI-module. The intersection detector is trained for determining a list of bricks hittable by both robots when applied as input the first brick list and the second rick list including the list of bricks hit by the first robot and the second robot respectively.

In other embodiments, at act 225, the determined one hit-brick subset is the collision-bricks subset which denotes the list of the bricks hittable by both robots. In embodiments, such collision brick subset is determined during the robotic simulation by collecting the brick subset hit by both robots. For example, during the simulation of the motion of the two robotic programs, the system collects the data of the bricks that collide with both robots into a collision brick subset and, conveniently, the bricks' parent locations are stored as metadata to be extracted at a later stage.

At act 230, the system estimates the interference zone as the zone around the subset of collision-bricks. In other words, the interference zone is estimated as the zone comprising the set of 3D space portions where all the collision bricks are located.

At act 235, the system determines a set of critical target locations around the interference zone estimate. In embodiments, the critical target locations are determined via a robotic simulation tool. In other embodiments, the critical target locations are inferred without a robotic simulation tool, for example by retrieving from the stored brick metadata the relevant parent target locations of the collision brick subset.

In embodiments, the system defines semaphore and/or controlling signals - to be set before and after each relevant critical target location - to prevent that two robots are simultaneously occupy the interference zone. Advantageously, in embodiments, such semaphore signals are used in the communication between PLCs and robots at the shopfloor.

In embodiments, at least one of acts 215, 225, 235 is performed via a virtual robotic simulation.

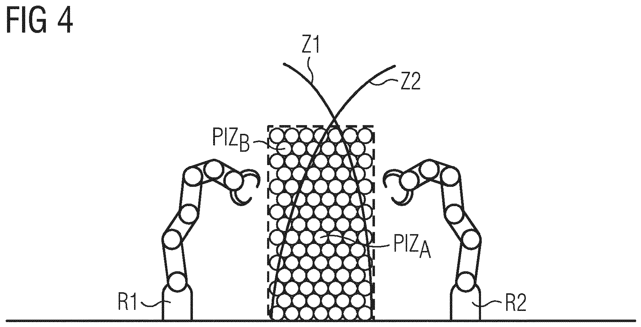

Figure 4 schematically illustrates two examples of potential interference zones in accordance with disclosed embodiments. In embodiments, the potential interference zone PIZ, PIZ_{A}, PIZ_{B} is initially determined as basis zone to then estimate the interference zone between two or more robots.

In embodiments, two examples of potential interference zones PIZ_{A}, PIZ_{B} are determined based on the intersection of two robotic reach-zones Z1, Z2 generated from the two stretched kinematic chains of the corresponding two robots R1, R2. The volume of the first reach zone Z1 of the stretched kinematics chain (not shown) of the first robot R1 is determined. The volume of the second reach zone Z2 of the stretched kinematics chain (not shown) of the second robot R2 is determined. The intersection zone between the first and second 3D reach zones Z1, Z2 is determined. In a first embodiment, the potential interference zone is this determined intersection/shared zone PIZ_{A}. In a second embodiment, the potential interference zone is any zone which includes this determined intersection PIZ_{A}, for example, a cuboid zone PIZ_{B} e.g. bounding box drawn around the intersection shown in Figure 4. In a subsequent phase, to estimate the interference zone, the chosen potential interference zone PIZ_{A}, PIZ_{B} is then filled with a cloud of balls as illustrated with the ball-pattern filling in Figure 4.

Hence, in exemplary embodiments of the initial phase, the potential interference zone is determined based on the intersection of two robots reach zones Z1, Z2 generated from stretched kinematic chains of the two corresponding robots. For example, to be on the safe side, the two reach zones Z1, Z2 are obtained by stretching out to the maximum the kinematic chain forward to the other robot and vice versa to. In other words, the potential interference zone includes at least the minimal intersection zone PIZ_{A} between the two reach zones Z1, Z2 of the two robots R1, R2. Such minimal intersection zone PIZ_{A} has the advantage that is going to filled with a reduced number of balls. Conveniently, a reduced number of balls reduces the time to generate the balls and to afterwards to check their collisions with robots.

Indeed, in other embodiments, the determined potential interference zone may preferably be chosen to be any zone larger than the minimal intersection zone PIZ_{A}, as for example with the choice of the cuboid zone PIZ_{B} delimited by the dashed line in Figure 4. In fact, such cuboid zone PIZ_{B} although being a larger zone than the minimal one, it may have the advantage of being simpler and faster to determine and to fill with balls.

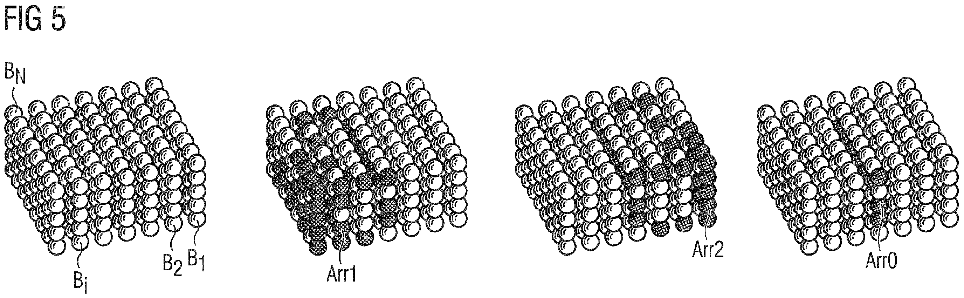

Figure 5 schematically illustrates an example of interference zone estimation in accordance with disclosed embodiments. In embodiments, the system generates a ball cloud i.e. a set of identical balls B₁,B₂, Bᵢ, .. B_{N} to fill the 3D space of the potential interference zone PIZ between the two robots (not shown). In embodiment, the ball cloud can be represented via an array or list pointing to certain descriptor data of the N balls {B₁,B₂, Bᵢ, .. B_{N}}. For example, in exemplary embodiments, such descriptor ball data may be - for each ball Bi - the coordinate of its own geometric center (Xi,Yi,Zi) given that since in this example their radius r_{B} is the same for each ball.

In embodiments, the system determines the first array of balls Arr1 hit by the first robot (not shown) while executing its robotic program. This determined first array of balls Arr1 or first subset of hit-balls is illustrated with the highlighted balls in the second ball cloud of Figure 5. In embodiments, this first ball array Arr1 is determined, via a robotic simulation tool, by simulating the robot's motion along its robotic path and by collecting each ball that collides with the first robot into a hit-ball subset Arr1. In other embodiments, this first ball array Arr1 is determined by collecting hit balls via robotic motion predicting techniques. This determined first array of balls Arr1 or first subset of hit-balls provides an estimate of the swept volume SV1' of the first robot in the potential interference zone.

In embodiments, the system determines the second array of balls Arr2 hit by the second robot (not shown) while executing its robotic program. This determined second array of balls Arr2 or second subset of hit-balls is illustrated with the highlighted balls in the third cloud of Figure 5. In embodiments, this second ball array Arr2 is determined, via a robotic simulation tool, by simulating the robot's motion along its robotic path and by collecting each ball that collides with the second robot into a hit-ball subset Arr2. In other embodiments, this second ball array Arr2 is determined by collecting hit balls via robotic motion predicting techniques. This determined second array of balls Arr2 or second subset of hit-balls provides an estimate of the swept volume SV2' of the second robot in the potential interference zone.

In embodiments, the system determines the subset of collision balls Arr0 which is the array comprising the hit bricks that are hit by both the first and second robots. This determined array of balls Arr0 or subset of collision-balls is shown with the highlighted balls in the fourth cloud of Figure 5. The collision balls subset Arr0 is an estimate of the interference zone IZ' whereby both robots are at risk to collide with each other while performing their corresponding robotic program operations. In embodiments, the collision balls subset Arr0 is the intersection of the first and second array of balls Arr1, Arr2 i.e. the shared balls. In embodiments, collision balls subset Arr0 is determined as the intersection of the first and second arrays Arr1, Arr2 by an "intersection detector" AI-module. In embodiments, the collision balls subset Arr0 is determined as the list of balls hit by both robots during the motion of their corresponding robotic program operations e.g. by running their corresponding robotic simulation or by robotic motion predicting techniques.

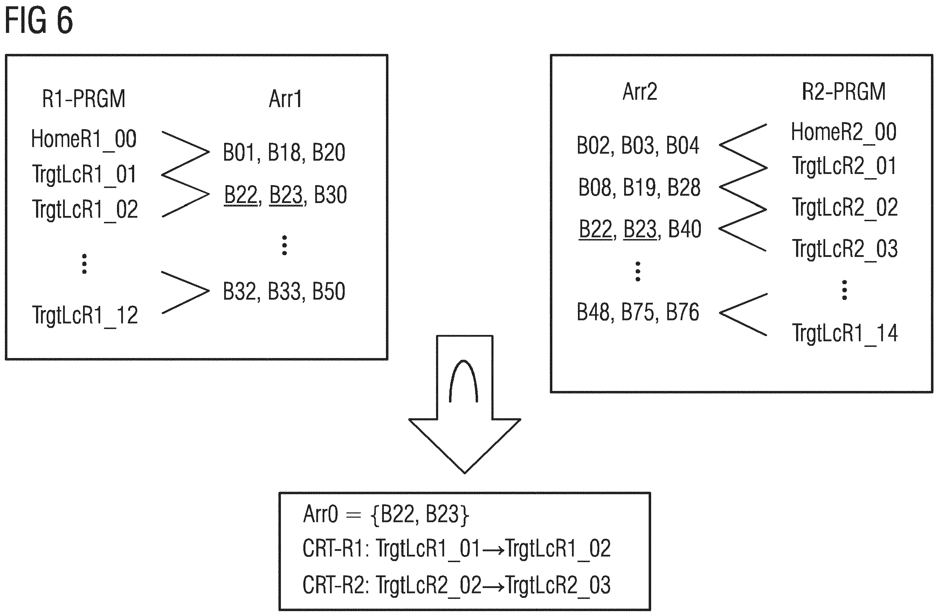

Figure 6 schematically illustrates an example of critical targets determination in accordance with disclosed embodiments.

Assume that the potential interference zone between two robots R1, R2 is filled with a cloud of N balls in the 3D space (not shown). At the left of Figure 6, it is shown an exemplary robotic path of the robotic program R1-PRGM of the first robot and the corresponding array Arr1 of the balls hit by the first robot in the potential interference zone. The robotic path includes the twelve target locations <HomeR1_00, TrgtLcR1_01, ..., TrgtLcR1_12>. The first ball array Arr1 is determined by collecting the subset of balls {B01;.. ;B50} from the PIZ ball cloud comprising the balls hit by the first robot during the execution of its robotic program along its robotic path. For example, when the first robot moves between the first pair of robotic target locations (HomeR1_00 TrgtLcR1_01), it hits the ball subset {B01; B18; B20}, when the the first rbot moves between the second location pair (TrgtLcR1_01 TrgtLcR1_02) it hits ball subset {B22; B23; B30} and so on, until it reaches the last location pair while hitting balls {B32; B33; B50}. At the right of Figure 6, it is shown an example robotic path of the robotic program R2-PRGM of the second robot and the corresponding array Arr2 of the balls hit by the second robot in the potential interference zone PIZ. The robotic path includes the fourteen target locations <HomeR2_00, TrgtLcR2_01 ..., TrgtLcR2_14>. The second ball array Arr2 is determined by collecting the subset of balls {B02,.. ,B76} from the PIZ ball cloud comprising the balls hit by the second robot during the execution of its robotic program along its robotic path. At the bottom of Figure 6, the array of collision balls Arr0 {B22, B23} is determined as the ball subset comprising all the balls that are hit by both robots. The collision ball Arr0 represents an estimate of the interference zone IZ' between the two robots R1, R2 in the 3D space. In embodiments, each ball of the arrays Arr0, Arr1, Arr2 are indexed and through such indexes the position in the 3D space can be retrieved. In embodiments, for each hit ball, the system stores metadata information regarding the corresponding parent target locations in order to determine the critical targets afterwards. For example, with regards the collected collision balls in Arr0 - {B22,B23} - via the metadata, the system determines the critical target locations which are, for the first robot, the second location pair and, for the second robot, the third location pair. Accordingly, in embodiments, the first robot waits for PLC signal permission to continue before it reaches the critical target TrgtLcR1_01 it updates and its signal after getting out of critical target TrgtLcR1_02. Similarly, the second robot waits for signal permission to continue its operation before reaching the critical target TrgtLcR2_02 and it updates its signal after getting out of critical target TrgtLcR2_03.

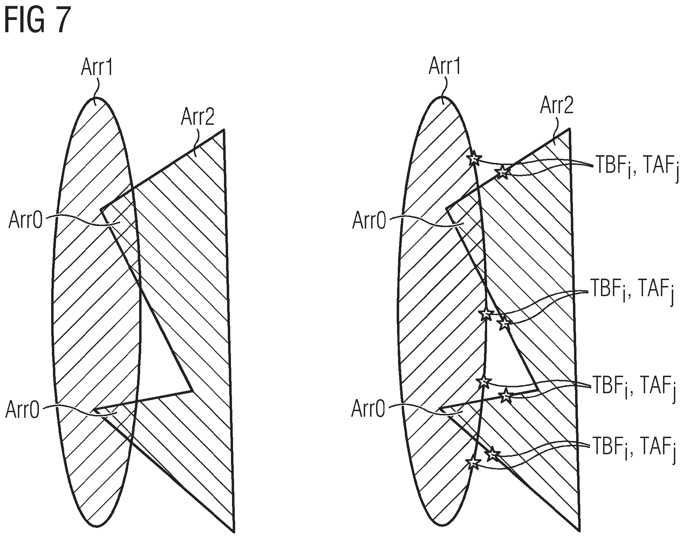

Figure 7 schematically illustrates an example of critical targets in accordance with disclosed embodiments. For explanatory purposes, assume the first array of hit balls of the first robot is shown in the 2D filled section of the elliptically shaped section Arr1 and assume the second array of hit balls of the second robot is shown in the 2D filled section of the polygonal shaped section Arr2. The intersection of the two arrays Arr1, Arr2 is shown in the common section portions Arr0 which represent the estimate of the interference zone IZ of the two robots. The critical targets TBFi, TAFj, are determined as target locations before and after the two IZ portions and they are marked with the eight stars in Figure 7.

### Algorithms of exemplary embodiments to train and use an Intersection Detector AI-module

Embodiments illustrate how to synthetically generate a training dataset to train an AI-module to detect the array Arr0 of bricks shared between two arrays of bricks Arr1, Arr2. Assume that a brick is a ball with a center and a predefined radius size. A shared ball array Arr0 is created by generating a set of balls in the 3D space. A first array Arr1 is created whereby this first array Arr1 includes the set of balls of the shared array Arr0 plus a first set of other additional balls. A second array Arr2 is created whereby this second array Arr2 includes the set of balls of the shared array Arr0 plus a second set of other additional balls different than the previous first set. Preferably, in embodiments, the arrays Arr0, Arr1, Arr2, comprise consecutive and/or continuous set of balls. Accordingly, several array Lists < Arr1; Arr2; Arr0> are synthetically created to train an intersection detector AI-module or herein simply called intersection detector. Conveniently, the required ball-array computation may be done without the need of modeling virtual robots, of virtual robotic guns, or of other complex industrial graphical objects and of complex simulation calculations. Advantageously, the system synthetically generates the training dataset in an easy manner departing from the array Arr0 which comprises the "shared" balls- herein also referred as "collision" balls.

In embodiments, the generated training data Lists <Arr1; Arr2; Arr0> are processed and organized in input training datasets < Arr1; Arr2> and corresponding output training datasets <Arr0> for training a function via an Artificial Intelligence ("AI") algorithm, preferably a supervised machine learning algorithm. In embodiments, the training datasets are utilized to train an AI-model and to generate an Intersection Detector AI-module to determine the shared-ball subset Arr0 between two sets of balls Arr1, Arr2. In embodiments, the Intersection Detector AI-module is used to compute as output data the shared-ball array Arr0 when receiving as input data any couple of two ball arrays Arr1, Arr2.

In embodiments, the Intersection Detector is advantageously used to estimate the interference zone around a subset of collision balls hit by two robots while executing their corresponding robotic programs in order determine the critical target locations around such interference zone.

In embodiments, the system identifies the IZ critical target locations of a plurality of robots operating in a robot station/cell by performing one or more of the following steps for each couple of robots R1, R2:
- determining the corresponding hit-ball arrays Arr1 [R1], Arr2[R2] e.g. the lists of balls hit in the potential interference zone, by simulating their robotic programs or by predicting their motion outcome;
- applying the hit-ball arrays Arr1, Arr2 as input into the Intersection Detector and getting the collision-ball array as output Arr0;
- identifying the critical target locations before and after the interference zone estimated to be the zone around the balls of the collision-ball Arr0 which includes the ball subset hit by both robots;
- synchronizing semaphore signals on such critical target locations:
- repeating the above steps for the next relevant couple of robot R1, R2.

In embodiments, the hit-ball arrays Arr1, Arr2 are determined by simulating the corresponding robotic programs. For example, the system plays the robotic simulation and, for each robotic target location, it tracks and collects the list of hit balls as swept volume estimate. In embodiments, the list of hit balls Arrx is determined by surrounding the robot Rx with the balls of the potential interference zone and by checking collisions between the ball objects and the robot during simulation. In embodiments, during the simulation, each ball with which the robot Rx collides is collected, and inserted into Arrx the list of hit-balls by robot Rx. In embodiments, the information of the correspondence between hit-ball and originated target location is stored as metadata for determining the critical target. Accordingly, with embodiments, at the end of the robotic simulation, for each robot Rx, the per-target-location hit-ball array Arrx is determined as estimate of its swept volume SVx' inside the potential interference zone.

In embodiments, the metadata information regarding the parent location of the balls is preferably not used for the AI training and usage of the intersection detector and it is instead conveniently stored separately as metadata to be retrieved upon need. In fact, for example, after the collision ball array Arr0 is determined, the parent target location is retrieved via a mapping in the metadata and then the semaphore signals are determined before and after such critical target locations.

In embodiments, the value of the radius r_{B} of the ball preferably depends on the distance value between two target location. As the skilled persons knows the smaller the radius, the more accurate is the interference zone estimate. However, given that the goal of the interference zone estimate is to determine the target locations before and after it, with embodiments, it is conveniently not necessary to have a high granularity of balls and to reduce the radius value too much. For example, the ball radius can be kept relatively large, e.g. the ball diameter can be kept to be 0.2-0.5 of the distance between the two targets, in this manner the number of generated balls is kept low and, advantageously, the time needed to generate the balls and to check their collisions with the robots is also kept low.

The above-described example embodiments mainly refer to two robots. The skilled person can easily apply the teachings for the case where there are multiple robots which may collide with each other in a plurality of interference zones for example repeating the IZ determination for the other couples of robots or for any n-tuple of robots.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims.

## Claims

1. A computer implemented method for determining critical target locations around the interference zone between at least two virtual robots in an industrial environment, comprising the following steps:
a) receiving (205) data on a first virtual robot and on a second virtual robot to load into a virtual robotic application;
b) receiving (210) data on the two robotic programs of the two corresponding robots;
c) determining (215) a potential interference zone based on an intersection of two robotic reach-zones generated from stretched kinematic chains of the two corresponding robots;
d) generating (220) a set of bricks filling at least the majority of the potential interference zone;
e) determining (225) from the set of bricks, one or more subsets of hit-bricks comprising bricks hittable by one or more robots based on the data of a corresponding robotic program;
f) estimating (230) the interference zone as the zone around a subset of collision-bricks comprising the hit-bricks that are hittable by both robots;
g) determining (235) a set of critical target locations around the interference zone estimate.

2. The method of claim 1, wherein at item e) the hit-bricks subsets consist of a first list of bricks hittable by the first robot and a second list of bricks hittable by the second robot and wherein at item f) the subset of collision bricks are determined by an "intersection detector AI module" trained for determining a list of bricks hittable by both robots when applied as input said first and second lists of bricks hit by one robot.

3. The method of claim 1, wherein at item e) the hit-brick subset is the collision-bricks subset comprising a list of bricks hittable by both robots.

4. The method of any of the previous claims, further comprising the step of setting robotic signals before and after relevant critical target locations to prevent that two robots are simultaneously inside the estimated interference zone.

5. The method of any of the previous claims, wherein the size of the bricks is based on the distance between target locations.

6. The method of any of the previous claims, wherein the shape of the bricks is spherical.

7. The method of any of the previous claims, wherein at least one of steps c), e), g) is performed via a virtual simulation.

8. The method of any previous claims further comprising the step of controlling at least one real robot motion based on at least one of the determined critical target locations.

9. A data processing system comprising: a processor; and an accessible memory, the data processing system particularly configured to:
a) receive (205) data on a first virtual robot and on a second virtual robot to load into a virtual robotic application;
b) receive (210) data on the two robotic programs of the two corresponding robots;
c) determine (215) a potential interference zone based on an intersection of two robotic reach-zones generated from stretched kinematic chains of the two corresponding robots;
d) generate (220) a set of bricks filling at least the majority of the potential interference zone;
e) determine (225) from the set of bricks, one or more subsets of hit-bricks comprising bricks hittable by one or more robots based on the data of a corresponding robotic program;
f) estimate (230) the interference zone as the zone around a subset of collision-bricks comprising the hit-bricks that are hittable by both robots;
g) determine (235) a set of critical target locations around the interference zone estimate.

10. A non-transitory computer-readable medium encoded with executable instructions that, when executed, cause one or more data processing system to:
a) receive (205) data on a first virtual robot and on a second virtual robot to load into a virtual robotic application;
b) receive (210) data on the two robotic programs of the two corresponding robots;
c) determine (215) a potential interference zone based on an intersection of two robotic reach-zones generated from stretched kinematic chains of the two corresponding robots;
d) generate (220) a set of bricks filling at least the majority of the potential interference zone;
e) determine (225) from the set of bricks, one or more subsets of hit-bricks comprising bricks hittable by one or more robots based on the data of a corresponding robotic program;
f) estimate (230) the interference zone as the zone around a subset of collision-bricks comprising the hit-bricks that are hittable by both robots;
g) determine (235) a set of critical target locations around the interference zone estimate.

11. A computer implemented method for generating a training dataset for training an intersection detector AI-module configured for outputting a list of intersection bricks, the method
comprising:
- receiving data on several initial lists referring to a set of initial bricks in a 3D space - hereafter called Arr0;
- for each list Arr0, generating a first list referring to the initial brick set plus a first set of other additional bricks - hereafter called Arr1; generating a second list referring to the initial brick set plus to a second set of other additional bricks different than said first brick set - hereafter called Arr2;
- collecting the first and second lists Arr1, Arr2 for populating an input training dataset and collecting the associated list Arr0 for populating an output training dataset;
- storing the input and output training dataset to train an AI model of the intersection detector AI module.

12. A computer implemented method for providing an intersection detector AI-module
configured for outputting a list of shared bricks, the method comprising:
- receiving a training dataset with a first interface, wherein said training dataset comprises an input training dataset and an output training dataset, wherein the input training dataset comprises several couples of a first and a second list of bricks in a 3D space; and the output training dataset comprises, for each couple of first and second brick lists, a corresponding list of shared bricks;
- training the intersection detector AI module with the input and output training datasets;
- providing said trained AI module with a second interface.
